# EUROPEAN PATENT APPLICATION

(11) **EP 2 354 329 A1**
(43) Date of publication of application: **10.08.2011**
(21) Application number: 11382019.5
(22) Date of filing: 27.01.2011
(51) Int. Cl.: E02F 5/10, A01G 25/06, E02B 11/02, F16L 1/028

(54) **Device for installing irrigation pipes**

(30) Priority: 04.02.2010 ES 201030151
(71) Applicant: Sagué Frigolé, Jordi, 17244 Cassa de la Selva, Gerona (ES); Sagué Clara, Joan, 17244 Cassa de la Selva, Gerona (ES)
(72) Inventor: Sagué Frigolé, Jordi, 17244 Cassa de la Selva, Gerona (ES); Sagué Clara, Joan, 17244 Cassa de la Selva, Gerona (ES)
(74) Representative: Carpintero Lopez, Francisco

(57) **Abstract**

The device is made up of a frame (1) to which there is associated a coulter (3), ending in the upper part in an articulated arm (5) and ending in a rear part in a reel (7) on which the flexible tube (8) to be installed is wound. A pair of parallel flat bars (10) is attached to the coulter (3), a second frame (11) being arranged in the upper part on said assembly acting as a guide, ending in the upper part in a set of motor-powered rollers (12) between which the flexible tube (8) passes and which are responsible for pulling same. The operation of the motor-powered rollers (12) is aided by a control circuit associated with a GPS module as well as a series of controls located in the cabin of the tractor vehicle and a supply delivery regulator of the motor of the tractor vehicle which synchronizes the forward movement speed of the vehicle with the forward movement speed of the rollers, an area for cutting the flexible tube (8) and coupling the corresponding pipes (14), elbows or "tees" being defined such that a marking element (13) for marking the point of coupling of the pipes (14) or accessories in question is arranged between the mentioned rollers which can be activated by the control circuit according to the positioning recorded by the GPS module.

## Description

### Object of the Invention

The present invention relates to a device which has been especially designed to allow installing in a virtually automatic manner sprinkler support pipes in irrigation farming crops, as well as the complementary flexible tubes or ducts associated therewith.

The object of the invention is to provide a device by means of which the manual labor necessary in the tasks for installing the mentioned pipes as well as the time of carrying out said tasks are considerably reduced such that when installed in a tractor, the ditch is dug and the tubes as well as the pipes associated with the latter are buried in their exact point in a single pass.

The invention is therefore related to the agricultural field.

### Background of the Invention

In the practical field of application of the invention, specifically in the field of irrigation farming crops, it is common to use irrigation circuits based on flexible ducts which are arranged at a certain distance under the surface of the ground, having sections emerging to the surface every certain distance, in which there are coupled the irrigation pipes on which the corresponding sprinklers or accessories in question will later be coupled.

For this task, it is necessary to previously dig a ditch, and abundant manual labor prior to said installation is also necessary which, with the aid of a GPS device and a series of stakes and the corresponding paint to allow seeing the latter better, indicates the points where the installed tubing must be cut to form the corresponding connection of the irrigation pipe.

It is therefore a laborious and complex process in which a considerable amount of material is wasted due to cutting multiple sectors of the tubing in which the mentioned pipes must be coupled, being necessary to distribute the material over the entire farm given that the process of connecting the pipes to the tubing is after the tractor digging the ditch has already passed.

### Description of the Invention

The device proposed by the invention solves in a fully satisfactory manner the drawbacks set forth as a result of its simple by highly effective structuring.

To that end and more specifically, the device of the invention is made up of a frame intended for being coupled to a tractor vehicle, in the lower part of which a coulter is arranged which is responsible for digging the ditch or furrow in which to bury the flexible tubing to which the irrigation pipes are coupled, which frame is provided with a hydraulically operated articulated arm ending at its free end in a reel, responsible for receiving the flexible hose or duct which, as will be seen below, will be unwound and introduced in the ditch dug by the coulter as the tractor vehicle moves forward.

A pair of flat bars is arranged behind the coulter and parallel thereto, between which flat bars a guide is arranged for the mentioned flexible tube, aided by a set of motor-powered rollers, which tube is unwound from the reel by such rollers.

The operation of the mentioned rollers is aided by a control circuit associated with a GPS module, as well as a series of stop and start switches for the device.

A tube marking device will be arranged between the set of rollers, which device is operated by an electromagnet or the like, controlled by the GPS module, such that according to the coordinates entered, i.e., the distance between pipes, elbows or "tees" for each section of tubing, said marking will be activated automatically.

Consequently, and from this structuring, once the coulter forms the entrance hole, the tractor will travel according to the path of the envisaged irrigation circuit, starting the device by means of activating a first switch, such that through a delivery regulator, the drive speed of the rollers of the tube housed in the reel will be synchronized with the forward movement speed of the tractor vehicle, said tube being buried by means of the guide defined by the two parallel flat bars arranged behind the coulter, the vehicle stopping according to the coordinates received by the GPS after marking the tubing in the corresponding area in which a pipe, elbow or tee must be coupled, such that between the drive rollers of the tubing and the guide defined behind the coulter a wide space is arranged which allows operators to cut the tubing and corresponding connection of the different types of pipe, elbow or "tee" in question, such that once said maneuver has been performed, the device will start again when the clutch is released or by pushing the corresponding button, the movement of the tube likewise being synchronized with the forward movement speed of the tractor vehicle.

Once the pipe is coupled at both ends of the previously cut tube, by simply pulling the rollers over the tube said pipe is moved towards the pair of vertical flat bars which act like a guide, making said pipe adopt a completely vertical arrangement at the outlet of the device.

Although the swiveling arm carrying the reel of flexible tube tends to adopt a higher arrangement in the working situation, the articulated nature thereof allows it to be easily lowered by means of the mentioned hydraulic mechanism to a height close to the ground, facilitating the tasks of changing or replacing the reel.

Right before the pipe comes out of the device, it has been envisaged that a support of any conventional type be coupled thereto so once implanted, said pipe tends to swivel to the side thereof due to the effect of its own weight.

The operation described will be repeated as many times necessary, the control circuit being able to incorporate switches for the manual control of the movement in both directions of the motor-powered rollers.

A very effective device is thus achieved which allows drastically reducing the time used in installing irrigation circuits of this type, such that with a single pass the ditch is dug and the tubes and the pipes are installed, it being unnecessary to distribute the material throughout the field because it can be loaded in the tractor vehicle, which need not be high powered, since the width of the coulter is considerably reduced, slightly greater than the diameter of the tubing to be installed.

### Description of the Drawings

To complement the description being made and for the purpose of aiding to better understand the features of the invention according to a preferred practical embodiment thereof, a single drawing has been attached as an integral part of said description in which the following has been depicted with an illustrative and non-limiting character:

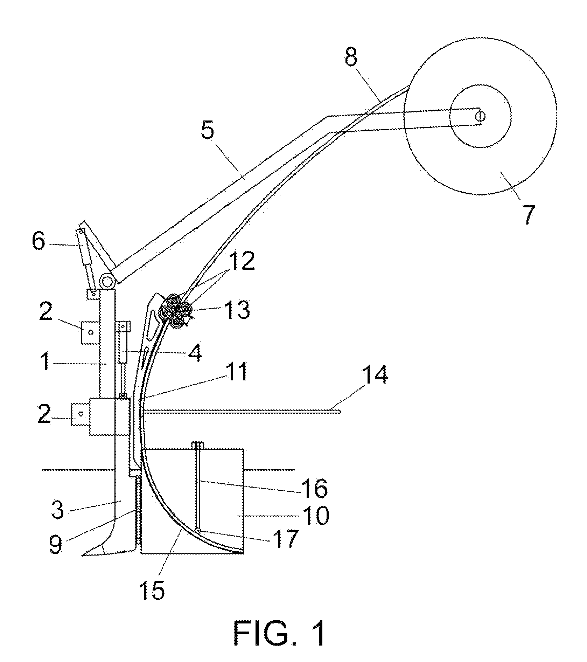

Figure 1 shows a schematic side elevational view of a device for automatically installing irrigation pipes carried out according to the object of the present invention.

### Preferred Embodiment of the Invention

In view of the mentioned figure, it can be observed how the device of the invention is made up of a frame (1), provided with fixing means (2) for fixing it to a tractor vehicle not depicted in the drawing, which frame adopts a vertical arrangement and which has associated therewith a coulter (3), the working inclination and depth of which can be regulated through a hydraulic cylinder (4), which frame (1) ends in the upper part in an articulated arm (5) aided by a second hydraulic cylinder (6), and subsequently ending in a reel (7) on which the flexible tube (8) to be installed is wound.

A pair of parallel flat bars (10) which adopt a vertical arrangement with a separation between them that is suitable for the diameter of the tube to be installed is attached to the mentioned coulter (3) by means of a set of hinges (9), only one of which flat bars is depicted in the drawing because the internal structure of said assembly can be seen by eliminating the front flat bar, a second frame (11) being arranged in the upper part thereof acting as a guide ending in the upper part in a set of motor-powered rollers (12) between which the flexible tube (8) passes and which are responsible for pulling same.

The operation of the mentioned motor-powered rollers (12) is aided by a control circuit, not depicted in the drawing, associated with a GPS module as well as a series of stop and start switches of the device which will be located in the tractor vehicle cabin, which allows pulling the tube in either direction manually or automatically, for which purpose said mechanism will be aided by a supply delivery regulator of the motor which synchronizes the forward movement speed of the vehicle with the forward movement speed of the rollers.

A marking element (13), of any conventional type, for example operated by means of an electromagnet, is arranged between the mentioned rollers, which element can be activated by the control circuit according to the positioning recorded by the GPS module, such that the flexible tube will have a mark precisely at the outlet of the said rollers and in the exact installation point allowing the users to cut said tube once the tractor vehicle has stopped and couple it to the pipe (14), elbow or tee in question, such that once the vehicle starts moving again, and as a result of the previously described synchronization, the rollers will operate again, pushing said assembly towards the pair of parallel flat bars (10) acting as a guide, in which a curved surface (15) will be arranged which, together with the mentioned side walls, allows the pipe (14) to adopt a perfectly vertical arrangement at the outlet of the device. An electric valve controlled by the control circuit according to the GPS position is arranged for the first pipe, activating the motor by GPS signal and getting the pipe (14) to come out of the flat bars in the exact moment it has to be installed.

The device is complemented with a support (16) provided with small wheels (17), or any other similar element, which assure the correct unwinding of the tube (8), preventing the latter from coming out of the pair of parallel flat bars (10). This support can be automatically placed and removed, controlled from the cabin with the aid of hydraulic cylinders.

It has specifically been envisaged that three controls, a stop button, a start button and a selector for selecting the motor or marker maneuver, are arranged in the tractor vehicle, specifically in the cabin thereof.

The first control is associated with the hydraulic cylinder (6), whereas the operation of the cylinder associated with the fixing means (2) for fixing the device to the tractor is controlled with the second control in order to regulate the inclination of the coulter (3), having a third control which operates the cylinder (4), allowing a regulation of the positioning of the device in depth.

Once 2 to 3 passes have been made with the coulter (3), according to how compact the terrain is, the depth at which the polyethylene tube (8) is to be installed is reached.

Once the furrow is made, the tube is installed. This process is done in this manner so that once the installation of the tube and pipes begins, the tractor does not experience any jerking because the terrain is already broken up / pulled up.

The coulter (3) is again placed in the horizontal position with the third control. Then the reel (7) is next lowered with the first control, allowing the extraction of the side cover and loading a roll of PE tube (8). Next the cover is put back on and the tip of the tube is inserted in the rollers (12). The motor is manually activated with the start button and a little bit of tube is introduced until it goes between the rollers, and it is stopped with the red button. The drum is raised with the first control so that it will not interfere. Next the first pipe is placed in the PE tube. Then the support (16) is extracted to assure the unwinding and the motor is started again until the pipe with the elbow reaches the end of the plowshare, the device is stopped with the stop button and the support (16) is again placed. At this point the machine is prepared with loaded PE tube and the pipe is ready to be installed.

Next the vehicle is placed at the beginning of the row and once it is centered in such row, the coulter is inserted in the ditch that was previously dug. The selector switch is activated in the roller activation position and the tractor begins to pull forward. Right when the vehicle passes through the point where the pipe must be installed, the GPS generates an electric signal which starts the motor and the motor pushes the tube and makes the pipe come out exactly in the point where it must be installed. The rollers in turn are fed the tube from the drum. Before reaching the second pipe, the switch corresponding to the marking position is activated such that the rollers do not stop because once they start, they can only be stopped with the stop button or with the clutch pedal. Upon reaching the point where the pipe is to be installed, as mentioned above, the GPS generates an electric signal which, with the aid of a timer, is reduced to a very short time (less than 1 second). This signal is used to activate the marker (13) and make a small mark on the tube. When the tractor driver hears the GPS beeping when it gives the signal, he steps on the clutch pedal, stopping the hydraulic motor with the aid of an end of stroke.

An operator cuts the PE tube where the mark is located to next take a pipe or accessory in question, already loaded in the vehicle, and installs it. Again, the support (16) is extracted and when the clutch pedal is released again to continue, again with the aid of an end of stroke, the rollers are started again such that the pipe is pushed downwards by the tube itself, being perfectly installed in its place.

## Claims

1. Device for installing irrigation pipes, **characterized in that** it is made up of a frame (1) provided with fixing means (2) for fixing it to a tractor vehicle, and to which frame there is associated a coulter (3), which frame (1) ends in the upper part in an articulated arm (5), aided by a hydraulic cylinder (6), and subsequently ending in a reel (7) on which the flexible tube (8) to be installed is wound, with the particularity that a pair of parallel flat bars (10) adopting a vertical arrangement is attached to the coulter (3) by means of a set of hinges (9), a second frame (11) being arranged in the upper part on said assembly acting as a guide, ending in the upper part in a set of motor-powered rollers (12) between which the flexible tube (8) passes and which are responsible for pulling same, with the particularity that the operation of the motor-powered rollers (12) is aided by a control circuit associated with a GPS module as well as a series of stop and start switches of the device located in the cabin of the tractor vehicle, said circuit being associated with a supply delivery regulator of the motor of the tractor vehicle which synchronizes the forward movement speed of the vehicle with the forward movement speed of the rollers, an area for cutting the flexible tube (8) and coupling the corresponding pipes (14), elbows or "tees" in question being defined between the pair of parallel flat bars (10) and the motor-powered rollers (13), with the particularity that a marking element (13) for marking the point of coupling of the pipes (14) or accessories in question is arranged between the mentioned rollers, which marking element (13) is of any conventional type which can be activated by the control circuit according to the positioning recorded by the GPS module.

2. Device for installing irrigation pipes according to claim 1, **characterized in that** the coulter (3) is vertically movable with the aid of a hydraulic cylinder (4).

3. Device for installing irrigation pipes according to claim 1, **characterized in that** a curved surface (15) as well as an electric valve (16) for recording the implantation of the pipes (14) in the suitable point associated with the control circuit will be arranged within the pair of parallel flat bars (10) acting as a guide.
